# FASCICULE DE BREVET EUROPEEN

(11) **EP 0 838 608 B1**
(45) Date de publication et mention de la délivrance du brevet: **17.07.2002**
(21) Numéro de dépôt: 97401856.6
(22) Date de dépôt: 01.08.1997
(51) Int. Cl.: F16H 7/12

(54) **Tendeur de courroie, dispositif de transmission de puissance comportant un tel tendeur et moteur thermique pour véhicule automobile comportant un tel dispositif**
Riemenspanner, Riemenantrieb mit einem derartigen Riemenspanner und Verbrennungsmotor eines Kraftfahrzeugs mit einem derartigen Antrieb
Belt tensioning device, drive belt arrangement comprising such a device and internal combustion engine for a vehicle comprising such an arrangement

(30) Priorité: 25.10.1996 FR 9613047
(43) Date de publication de la demande: 29.04.1998
(73) Titulaire: HUTCHINSON, 75008 Paris (FR)
(72) Inventeur: Rointru, Claude, 37300 Joue-Les-Tours (FR); Tricoche, Denis, 37260 Monts (FR); Varin, Hervé, 37510 Ballan (FR)
(74) Mandataire: Hurwic, Aleksander

(56) Documents cités:
- EP-A- 0 193 802
- EP-A- 0 536 527
- EP-A- 0 541 387
- EP-A- 0 628 750
- DE-A- 2 819 333
- GB-A- 1 394 153
- US-A- 5 271 742

## Description

La présente invention se rapporte principalement à un tendeur de courroie pour dispositif mécanique de transmission de puissance, à un dispositif mécanique de transmission de puissance comportant un tel tendeur ainsi qu'à un moteur thermique pour véhicule automobile comportant un tel dispositif mécanique de transmission de puissance.

Les tendeurs sont habituellement mis en oeuvre pour compenser les variations géométriques des courroies des dispositifs mécaniques de transmission de puissance comportant une courroie passant sur une poulie entraînée par un axe moteur et au moins une poulie menée. Le galet d'un tel tendeur est appliqué avec précontrainte sur la courroie d'entraînement pour minimiser les variations de la tension mécanique dans la courroie en dépit des variations de conditions de service du moteur intervenant sur une assez longue période de temps. En rattrapant l'allongement statique et dynamique de la courroie, le tendeur évite le glissement de celle-ci par rapport aux flasques des poulies menantes ou menées d'un dispositif mécanique de transmission de puissance. Un tel tendeur comporte un galet appliqué sur la courroie monté à rotation autour d'un premier axe, le support du galet étant susceptible de tourner autour d'un second axe distinct et parallèle audit premier axe. Des moyens de rappel élastiques permettent au galet d'induire une tension mécanique dans la courroie pour compenser les variations de longueur statique et/ou dynamique dues notamment aux irrégularités cycliques du régime moteur, en particulier au ralenti ou lors des à coups engendrés par la mise en route et/ou l'arrêt des appareils entraînés par les arbres solidaires en rotation des poulies du dispositif mécanique de transmission de puissance.

Un tendeur selon le préambule de la revendication 1 est connu de EP 0 541 387 A.

Un tendeur comporte en outre des moyens d'amortissement, notamment hydrauliques, ou, comme décrit dans la Demande de Brevet Français N° 93 06898 (FR 2 706 561 A, EP 0 628 750 A), une garniture en élastomère du galet. Dans ce dernier cas, la garniture en élastomère assure également le rôle des moyens de rappel élastiques appliquant le galet sur la courroie. Bien que le tendeur de la Demande de Brevet Français N° 93 06898 assure un certain degré d'amortissement des vibrations dans la courroie, ces performances tant statiques que dynamiques en tant que tendeur sont limitées par l'absence de moyens élastiques de rappel distincts de celle assurée par le revêtement en élastomère. L'utilisation d'un tel tendeur est donc limitée à des valeurs faibles de tension et de variation de longueur de la courroie.

Malheureusement, la courroie en défilement sous tension mécanique vibre et transmet des vibrations acoustiques à l'air, générant un bruit qui peut se révéler gênant, notamment pour les passagers d'un véhicule automobile dans le cas de courroies de transmission ou de distribution d'un moteur thermique d'un véhicule automobile.

C'est par conséquent un but de la présente invention d'offrir un dispositif mécanique de transmission de puissance présentant un faible niveau sonore.

C'est également un but de la présente invention d'offrir un dispositif mécanique de transmission de puissance présentant un faible niveau de vibrations.

C'est aussi un but de la présente invention d'offrir un tendeur éliminant les vibrations de la courroie ayant d'excellentes performances dynamiques et statiques.

Ces buts sont atteints dans un tendeur selon l'invention par la combinaison d'une part, de moyens de rappel élastique appliquant des moyens d'appui, notamment un galet, sur la courroie et d'autre part, un revêtement des moyens d'appui en matériau absorbant les vibrations, les moyens de rappels élastiques étant distincts dudit revêtement en matériau absorbant les vibrations. De la sorte, le revêtement en matériau absorbant les vibrations amortit les vibrations du système résonnant constitué par les moyens de rappel élastique et la courroie.

L'invention a ainsi pour objet un tendeur de courroie comportant des moyens d'appui sur la courroie et des moyens de rappel élastiques coopérant avec les moyens d'appui et assurant l'application avec précontrainte des moyens d'appui sur la courroie pendant son fonctionnement, caractérisé en ce que les moyens d'appui sur la courroie comportent un revêtement en matériau absorbant les vibrations.

L'invention a également pour objet un tendeur, caractérisé en ce que les moyens d'appui sur la courroie comportent un galet et en ce que le revêtement en matériau absorbant les vibrations est une bande de roulement radialement externe du galet ayant une épaisseur comprise entre 1 et 10 mm.

L'invention a également pour objet un tendeur, caractérisé en ce que le matériau absorbant les vibrations est un élastomère.

L'invention a également pour objet un tendeur, caractérisé en ce que le revêtement en matériau absorbant les vibrations a une dureté comprise entre 30 Shore A et 95 Shore A, de préférence comprise entre 40 Shore A et 70 Shore A.

L'invention a également pour objet un tendeur, caractérisé en ce que ledit tendeur est un tendeur linéaire.

L'invention a également pour objet un tendeur, caractérisé en ce que les moyens de rappel élastique comportent un ressort à boudin assurant l'application avec précontrainte des moyens d'application sur la courroie et un circuit hydraulique d'amortissement de la variation de longueur du corps du tendeur.

L'invention a également pour objet un tendeur, caractérisé en ce que ledit tendeur est un tendeur rotatif.

L'invention a également pour objet un dispositif mécanique de transmission de puissance comportant au moins une poulie menante et une poulie menée, une courroie passant par la poulie menante et la ou les poulie(s) menée(s), caractérisé en ce qu'il comporte un tendeur selon l'invention dont les moyens d'appui sont appliqués avec précontrainte sur la courroie.

L'invention a également pour objet un dispositif selon l'invention, caractérisé en ce que ledit dispositif est un dispositif de transmission d'accessoire d'un moteur thermique d'un véhicule automobile comportant une poulie solidarisée en rotation avec l'axe d'un vilebrequin et une poulie solidarisée en rotation avec l'axe d'un alternateur.

L'invention a également pour objet un moteur thermique, caractérisé en ce qu'il comporte un tendeur et/ou un dispositif de transmission selon l'invention.

L'invention sera mieux comprise au moyen de la description ci-après et des figures annexées données comme des exemples non limitatifs et sur lesquels :
- la figure 1 est une vue de profil d'un dispositif mécanique de transmission de puissance comportant un tendeur linéaire selon la présente invention ;
- la figure 2 est une vue de profil d'un dispositif mécanique de transmission de puissance comportant un tendeur rotatif selon la présente invention.

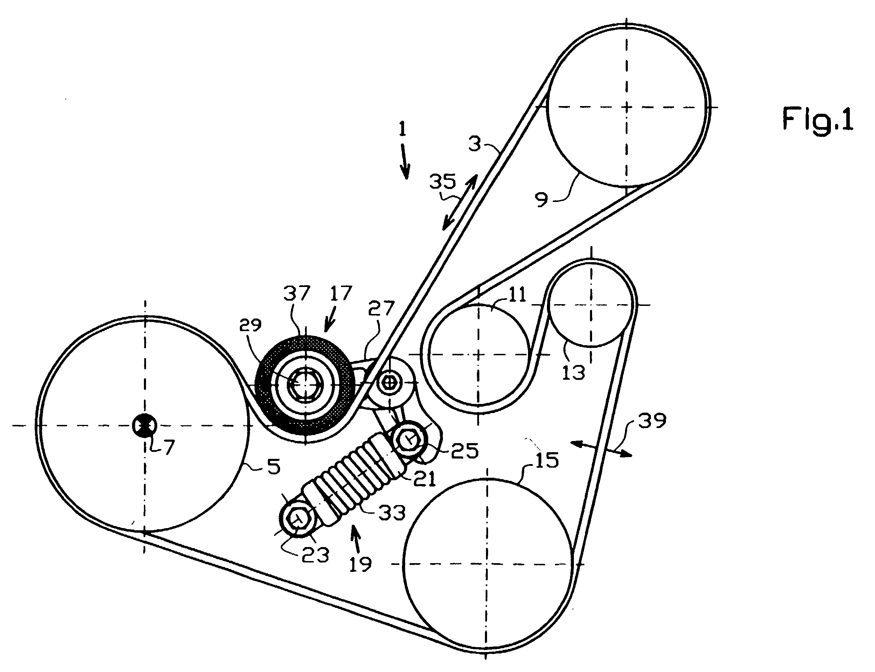

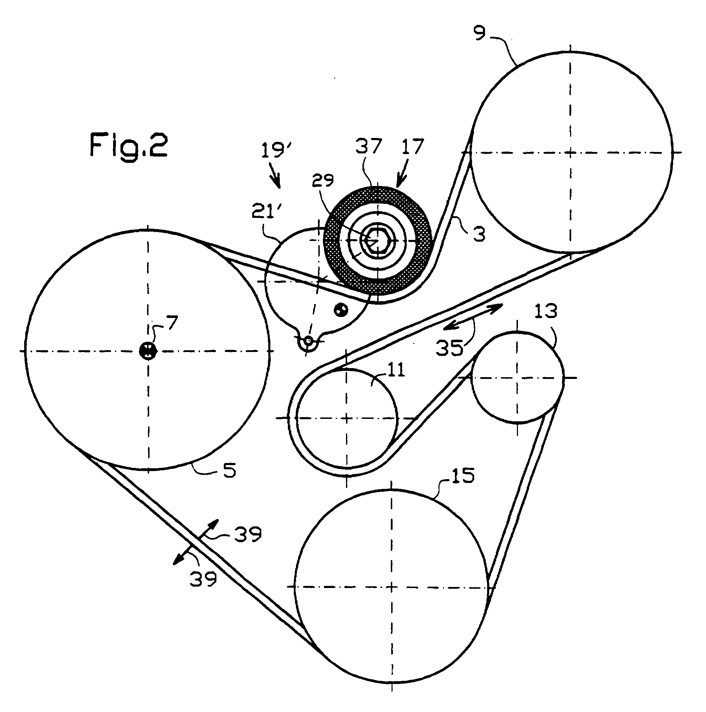

Sur les figures 1 et 2, on a utilisé les mêmes références pour désigner les mêmes éléments.

Sur les figures 1 et 2, on peut voir deux exemples de dispositif mécanique à courroie 3 de transmission de puissance appelé chaîne cinématique de transmission d'accessoire dans l'industrie automobile. La courroie 3 passe successivement par une poulie 5 solidarisée en rotation avec l'axe 7 d'un vilebrequin d'un moteur thermique d'un véhicule automobile, la poulie 5 assurant l'entraînement de l'ensemble de la chaîne cinématique de transmission d'accessoire des figures 1 et 2.

La courroie 3 passe sur une poulie 9 solidarisée en rotation avec l'axe d'un alternateur, sur un galet de renvoi 11, sur une poulie 13 d'une pompe hydraulique d'alimentation en fluide sous pression de la direction assistée du véhicule et sur une poulie 15 solidarisée en rotation avec l'axe de la pompe à eau du moteur du véhicule.

Dans l'exemple illustré sur la figure 1, un galet 17 d'un tendeur linéaire 19 prend appui sur la face externe de la courroie 3. Dans l'exemple non limitatif illustré sur la figure 1, le tendeur 19 est du type linéaire comportant un corps 21 muni à une première extrémité d'un premier oeil 23 articulé sur un axe fixé au bloc moteur (non représenté), et à une seconde extrémité du corps 21 opposé à la première extrémité d'un oeil 25 fixé à une première extrémité d'un levier 27 en L. La seconde extrémité du levier 27 porte le galet 17 tourillonnant autour d'un axe 29. Avantageusement, le levier 27 est monté à rotation sur le bloc moteur autour d'un axe 31 situé à l'intersection des branches du L. L'oeil 25 permet la rotation relative du levier 27 par rapport au corps 21 du tendeur 19 et l'oeil 23 permet la rotation relative du corps 21 du tendeur 19 par rapport au bloc moteur. Le corps 21 du tendeur 19 comporte des moyens élastiques, par exemple un ressort à boudin 33, assurant l'application avec précontrainte du galet 17 sur la courroie 3. La précontrainte exercée sur la courroie 3 est par exemple comprise entre 20 et 800 N, de préférence entre 70 et 600 N, avantageusement comprise entre 80 et 500 N. Avantageusement, le corps 21 du tendeur 19 comporte en outre un circuit hydraulique coaxial assurant l'amortissement des vibrations longitudinales de la courroie, illustrées par la flèche 35. Un exemple d'un tel circuit hydraulique est décrit dans la Demande internationale PCT/FR93/00245.

Sur la figure 2, on peut voir un dispositif de transmission de puissance analogue à celui de la figure 1 dont le tendeur linéaire 19 a été remplacé par un tendeur rotatif 19' comportant des moyens élastiques, notamment un ressort (non représenté) exerçant sur le galet 17 un couple de rappel vers la courroie 3 de manière à assurer l'application du galet 17 sur la courroie 3 avec précontrainte. Le galet 19' comporte un corps 21' sensiblement cylindrique excentré par rapport à l'axe de rotation 29 du galet 17.

Les galets 17 des tendeurs 19, 19' selon la présente invention peuvent comporter un palier lisse, notamment en céramique, PTFE ou métallique ou, avantageusement, comportent un roulement, notamment un roulement à billes ou à rouleaux.

Les galets 17 des tendeurs 19, 19' selon la présente invention comportent un bandage ou revêtement radialement externe 37 en un matériau absorbant les vibrations. Le revêtement 37 permet d'amortir les vibrations transversales 39 de la courroie 3.

On entend par matériau absorbant les vibrations, matériau qui possède une tangente δ (valeurs obtenues pour des sollicitations à 2 % en compression, à 100°C, à 25 Hz et avec une précontrainte de 5 %), par exemple comprise entre 0,05 et 0,65, de préférence entre 0,07 et 0,50, et par exemple égale à 0,095.

Le matériau des bandes de roulement du revêtement 37 est avantageusement choisi parmi les caoutchoucs de type chloroprène, EPDM, les caoutchoucs nitrile-butadiène (HNBR), EPR, ACSM, IIR, des matériaux thermoplastiques ou thermodurcissables ou leurs mélanges. Avantageusement, le matériau mis en oeuvre présente une bonne résistance aux hautes températures. La face externe de la bande de roulement 37 ou du revêtement 37 peut être recouverte avec un tissu, un non-tissé ou autre. Le matériau des bandes de roulement 37 ou de revêtement 37 a par exemple une dureté comprise entre 30 Shore A et 95 Shore A, de préférence entre 40 Shore A et 70 Shore A, avantageusement entre 55 Shore A et 65 Shore A.

Le galet 17 peut, sans sortir du cadre de la présente invention, comporter des flasques latérales, par exemple métalliques. Le revêtement ou la bande de revêtement 37 en matériau absorbant les vibrations est, par exemple, logé au fond d'une gorge de section trapézoïdale définie par les parois internes des flasques et un fond cylindrique coaxial au logement de l'axe du galet. Dans une variante de réalisation, le revêtement de la bande de roulement 37 s'étend également sur les faces internes des flasques.

Il est bien entendu que le dispositif mécanique à courroie de transmission de puissance des figures 1 et 2 n'est donné qu'à titre d'exemple non limitatif et que la géométrie et le nombre des poulies et galets mis en oeuvre dépendent des axes que l'on désire voir entraîner par la courroie.

La présente invention s'applique notamment à l'industrie mécanique.

La présente invention s'applique principalement à l'industrie automobile.

## Revendications

1. Tendeur de courroie comportant des moyens (17) d'appui sur la courroie (3) et des moyens de rappel élastique (27, 33) coopérant avec les moyens d'appui (17) et assurant l'application avec précontrainte des moyens d'appui (17) sur la courroie pendant son fonctionnement, **caractérisé en ce que** les moyens (17) d'appui sur la courroie (3) comportent en outre un revêtement en matériau absorbant les vibrations.

2. Tendeur selon la revendication 1, **caractérisé en ce que** les moyens d'appui sur la courroie (3) comportent un galet (17) et **en ce que** le revêtement (37) en matériau absorbant les vibrations est une bande de roulement radialement externe du galet (17) ayant une épaisseur comprise entre 1 et 10 mm.

3. Tendeur selon la revendication 1 ou 2, **caractérisé en ce que** le matériau absorbant les vibrations est un élastomère.

4. Tendeur selon l'une quelconque des revendications précédentes, **caractérisé en ce que** le revêtement en matériau absorbant les vibrations (33) a une dureté comprise entre 30 Shore A et 95 Shore A, de préférence comprise entre 40 Shore A et 70 Shore A.

5. Tendeur selon l'une quelconque des revendications précédentes, **caractérisé en ce que** ledit tendeur est un tendeur linéaire.

6. Tendeur selon la revendication 5, **caractérisé en ce que** les moyens de rappel élastique (27, 33) comportent un ressort à boudin (33) assurant ladite application avec précontrainte des moyens d'appui (17) sur la courroie (3) et un circuit hydraulique d'amortissement de la variation de longueur du corps (21) du tendeur.

7. Tendeur selon l'une quelconque des revendications 1 à 4, **caractérisé en ce que** ledit tendeur est un tendeur rotatif.

8. Dispositif mécanique de transmission de puissance comportant au moins une poulie menante (5) et une poulie menée (9, 13, 15), une courroie (3) passant par la poulie menante et la ou les poulie(s) menée(s), **caractérisé en ce qu'**il comporte un tendeur selon l'une quelconque des revendications précédentes dont les moyens (17) d'appui sont appliqués avec précontrainte sur la courroie (3).

9. Dispositif selon la revendication 8, **caractérisé en ce que** ledit dispositif est un dispositif de transmission d'accessoire d'un moteur thermique d'un véhicule automobile comportant une poulie (5) solidarisée en rotation avec l'axe (7) d'un vilebrequin et une poulie (9) solidarisée en rotation avec l'axe d'un alternateur.

10. Moteur thermique, **caractérisé en ce qu'**il comporte un tendeur selon l'une quelconque des revendications 1 à 7 et/ou un dispositif de transmission selon la revendication 8 ou 9.

## Patentansprüche

1. Riemenspanner, der Stützmittel (17) an dem Riemen (3) und elastische Rückstellmittel (27, 33) aufweist, die mit den Stützmitteln (17) zusammenwirken und das Angreifen der Stützmittel (17) mit mechanischer Vorspannung an dem Riemen während seines Betriebs gewährleisten,
**dadurch gekennzeichnet, daß**
die Stützmittel (17) an dem Riemen (3) ferner einen Überzug aus einem Material aufweisen, das die Schwingungen absorbiert.

2. Spanner nach Anspruch 1,
**dadurch gekennzeichnet, daß**
die Stützmittel an dem Riemen (3) eine Walze (17) aufweisen und daß der Überzug (37) aus dem die Schwingungen absorbierenden Material eine radial die Walze (17) außen umgebende Lauffläche ist, deren Dicke zwischen 1 und 10 mm beträgt.

3. Spanner nach Anspruch 1 oder 2,
**dadurch gekennzeichnet, daß**
das die Schwingungen absorbierende Material ein Elastomer ist.

4. Spanner nach einem der vorangehenden Ansprüche,
**dadurch gekennzeichnet, daß**
der Überzug (37) aus einem die Schwingungen absorbierenden Material eine Härte zwischen 30 Shore A und 95 Shore A, vorzugsweise zwischen 40 Shore A und 70 Shore A aufweist.

5. Spanner nach einem der vorangehenden Ansprüche,
**dadurch gekennzeichnet, daß**
der Spanner ein linearer Spanner ist.

6. Spanner nach Anspruch 5,
**dadurch gekennzeichnet, daß**
die elastischen Rückstellmittel (27, 33) eine Schraubenfeder (33), die das Angreifen der Stützelemente (17) mit Vorspannung an dem Riemen (3) gewährleistet und einen Hydraulikkreis zur Abschwächung der Längenänderung des Körpers (21) des Spanners aufweisen.

7. Spanner nach einem der Ansprüche 1 bis 4,
**dadurch gekennzeichnet, daß**
der Spanner ein Kreiselspanner ist.

8. Mechanische Vorrichtung zur Kraftübertragung, die mindestens eine treibende Scheibe (5) und eine getriebene Scheibe (9, 13, 15) aufweist, wobei ein Riemen (3) an der treibenden Scheibe und der (den) getriebene(n) Scheibe(n) vorbei läuft,
**dadurch gekennzeichnet, daß**
sie einen Spanner nach einem der vorangehenden Ansprüche aufweist, dessen Stützmittel (17) mit Vorspannung an den Riemen (3) in Angriff gebracht sind.

9. Vorrichtung nach Anspruch 8,
**dadurch gekennzeichnet, daß**
die Vorrichtung eine Kraftübertragungsvorrichtung für einen Verbrennungsmotor eines Kraftfahrzeugs ist, die eine Scheibe (5) aufweist, die mit der Achse (7) einer Kurbelwelle drehfest verbunden ist und die eine Scheibe (9) aufweist, die mit der Achse eines Wechselstromgenerators drehfest verbunden ist.

10. Verbrennungsmotor,
**dadurch gekennzeichnet, daß**
er einen Spanner nach einem der Ansprüche 1 bis 7 und/oder eine Übertragungsvorrichtung nach Anspruch 8 oder 9 aufweist.

## Claims

1. Belt tensioning device comprising means of bearing (17) on the belt (3) and elastic means of return (27, 33) cooperating with the bearing means (17) and ensuring prestressed application of the means of bearing (17) on the belt, **characterized in that** the means of bearing (17) on the belt (3) additionally include a covering of vibration-absorbing material

2. Tensioning device according to claim 1, **characterized in that** the means of bearing on the belt (3) comprise a roller (17) and **in that** the covering (37) of vibration-absorbing material is a tyre tread radially external to the roller (17) having a thickness of between 1 and 10 mm.

3. Tensioning device according to claim 1 or 2, **characterized in that** the vibration-absorbing material is an elastomer.

4. Tensioning device according to any one of the preceding claims, **characterized in that** the covering of vibration-absorbing material (33) has a hardness of between 30 Shore A and 95 Shore A, preferably between 40 Shore A and 70 Shore A.

5. Tensioning device according to any one of the preceding claims, **characterized in that** the said tensioning device is a linear tensioning device.

6. Tensioning device according to claim 5, **characterized in that** the elastic means of return (27, 33) comprise a coil spring (33) ensuring the said prestressed application of the means of bearing (17) on the belt (3) and a hydraulic circuit for damping the variation in length of the body (21) of the tensioning device.

7. Tensioning device according to any one of claims 1 to 4, **characterized in that** the said tensioning device is a rotating tensioning device.

8. Mechanical device for the transmission of power comprising at least one drive pulley (5) and one driven pulley (9, 13, 15), a belt (3) passing over the drive pulley and the driven pulley(s), **characterized in that** it includes a tensioning device according to any one of the preceding claims of which the bearing means (17) are applied in a prestressed manner on the belt (3).

9. Device according to claim 8, **characterized in that** the said device is a transmission device for an accessory of a heat engine of a motor vehicle, comprising a pulley (5) secured in rotation to the spindle (7) of a crankshaft and a pulley (9) secured in rotation to the spindle of an alternator.

10. Internal combustion engine, **characterized in that** it includes a tensioning device according to any one of claims 1 to 7 and/or a transmission device according to claim 8 or 9.
